# EUROPÄISCHE PATENTSCHRIFT

(11) **EP 2 064 692 B1**
(45) Veröffentlichungstag und Bekanntmachung des Hinweises auf die Patenterteilung: **25.05.2011**
(21) Anmeldenummer: 07802257.1
(22) Anmeldetag: 11.09.2007
(51) Int. Cl.: G09F 13/04, B60Q 1/00

(54) **BELEUCHTBARES BAUTEIL**
ILLUMINABLE COMPONENT
ÉLÉMENT ÉCLAIRABLE

(30) Priorität: 22.09.2006 DE 102006044813
(43) Veröffentlichungstag der Anmeldung: 03.06.2009
(73) Patentinhaber: Bayerische Motoren Werke Aktiengesellschaft, 80809 München (DE)
(72) Erfinder: HEITL, Ladislav, 83064 Raubling (DE)
(74) Vertreter: Günther, Hans Peter
(86) Internationale Anmeldenummer: PCT/EP2007/007894
(87) Internationale Veröffentlichungsnummer: WO 2008/034541

(56) Entgegenhaltungen:
- WO-A-2006/005954
- DE-A1- 4 421 942
- DE-U- 1 807 853

## Beschreibung

Die Erfindung betrifft ein beleuchtbares Bauteil gemäß dem Oberbegriff des Anspruchs 1.

Aus der DE 44 21 942 ist ein beleuchtbares Bauteil bekannt, bei dem in einem nicht durchleuchtbaren Grundträger mindestens eine Aussparung ausgebildet ist, in der ein beleuchtbarer Einsatz angeordnet ist. Der beleuchtbare Einsatz weist einen Trägerabschnitt auf, auf dem ein Leuchtmittel angeordnet ist. Das Leuchtmittel ist von einer Außenschicht umgeben, deren umlaufender Außenrand passgenau den dazu passenden umlaufenden Innenrand der Aussparung des Grundträgers ausfüllt. Die Form der Aussparung ist so gestaltet, dass Buchstaben, Wörter, Symbole und dergleichen beleuchtet sind. Ein solches beleuchtbares Bauteils kann beispielsweise bei einer Einstiegsleiste eines Kraftfahrzeuges oder bei einem Verkleidungsteil eines Innenraumes eines Kraftfahrzeuges verwendet werden.

Aufgabe der Erfindung ist es, ein beleuchtbares Bauteil zu schaffen, durch den ein besonderer optischer Eindruck erzeugbar ist.

Diese Aufgabe wird durch die Merkmale des Anspruchs 1 gelöst.

Bei einem erfindungsgemäßen, beleuchtbaren Bauteil gibt es zwei unterschiedliche Lichteffekte. Zum einen tritt ein durch ein Leuchtmittel erzeugtes Licht gedämpft aus einer zu beleuchtenden Fläche des beleuchtbaren Bauteils aus. Zum anderen ist die zu beleuchtende Fläche des beleuchtbaren Bauteils zumindest teilweise mit einem Spalt umgeben, aus dem ein durch ein Leuchtmittel erzeugtes Licht ungedämpft austritt. Dadurch ist der Spalt heller beleuchtet als die zu beleuchtende Fläche des beleuchtbaren Bauteils. Diese hellere Beleuchtung wirkt wie eine Lichtumrandung, so dass die zu beleuchtende Fläche des beleuchtbaren Bauteils noch stärker hervorgehoben wird.

In einer vorteilhaften Ausführungsform weist die Außenfläche der äußeren Deckschicht des beleuchtbaren Bauteils eine Dekoroberfläche und/oder eine Dekorschicht auf.

Vorteilhafterweise ist die Dekorschicht eine Beschichtung.

Die Dekorschicht kann in einfacher Weise eine galvanische Beschichtung oder eine Pulver Beschichtung sein.

Die Dekorschicht ist vorteilhafterweise eine Dekorfolie.

Die Außenfläche der äußeren Schicht weist in einer vorteilhaften Ausführungsform eine geprägte Oberfläche auf.

In einer vorteilhaften Ausführungsform ist die durchleuchtbare äußere Schicht ein Kunststoff.

Das Leuchtmittel ist vorteilhafterweise eine Leuchtfolie, die einen onbordigen oder einen offbordigen Inverter (Wandler) hat.

Der beleuchtbare Einsatz weist in einer vorteilhaften Ausführungsform ein Träger-Bauteil auf, wobei auf einer Oberfläche des Träger-Bauteiles die Leuchtfolie angeordnet ist.

An einer Unterseite der äußeren Schicht ist vorteilhafterweise eine Aussparung ausgebildet, in der die Leuchtfolie so angeordnet ist, dass ein umlaufender Seitenrand der Leuchtfolie von der Aussparung umgeben ist.

In einer vorteilhaften Ausführungsform sind auf der Oberseite des Träger-Bauteiles Vorsprünge zur punktförmigen, linienförmigen und/oder flächigen Abstützung einer Unterseite des Leuchtmittels ausgebildet.

An einer Unterseite des Träger-Bauteiles sind vorteilhafterweise Abstandsstege ausgebildet.

Die äußere Schicht weist in einer vorteilhaften Ausführungsform an Seitenwand-Abschnitten von Seitenwänden Abschrägungen auf, die an Abschrägungen von Seitenwand-Abschnitten aufliegen, die am Träger-Bauteil ausgebildet sind. Dadurch ist in einfacher Weise eine Ausrichtung und Fixierung des beleuchtbaren Einsatzes in der vorgesehenen Lage an der Unterseite des Grundträgers möglich.

Eine Ausführungsform der Erfindung wird nachstehend anhand der Zeichnungen beispielshalber beschrieben. Dabei zeigen:
- Fig. 1: einen Querschnitt eines beleuchtbaren Bauteils und
- Fig. 2: eine vergrößerte Detailansicht eines beleuchtbaren Einsatzes, der in einer Aussparung des beleuchtbaren Bauteils befestigt ist.

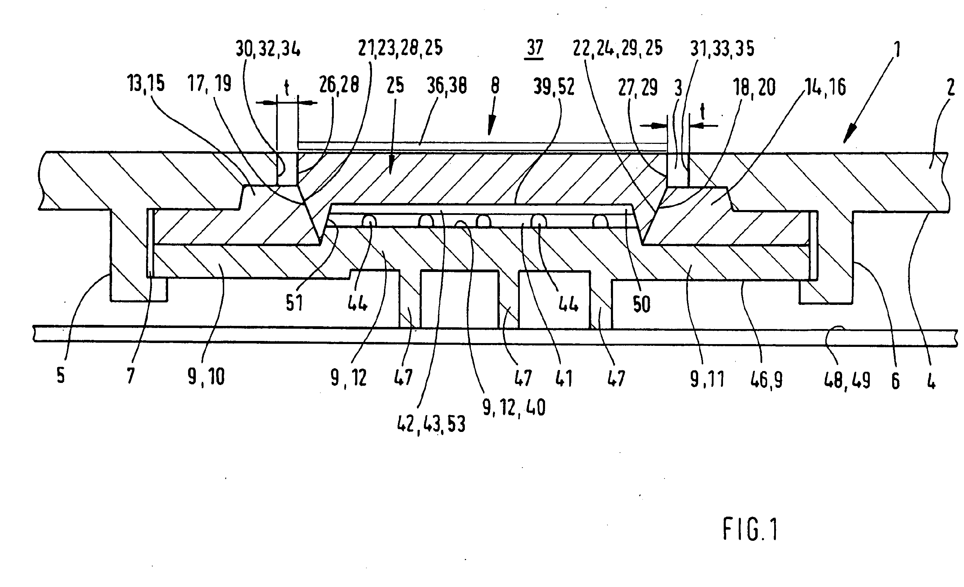

Die Fig. 1 zeigt ein beleuchtbares Bauteil 1, das einen Grundträger 2 mit einer Aussparung 3 aufweist. Die Aussparung 3 ist beispielsweise in Form eines Schriftzuges, eines Buchstabens oder mehrerer Buchstaben oder in Form von Symbolen ausgebildet.

An einer Unterseite 4 des Grundträgers 2 sind voneinander beabstandete, hakenförmige Halterungsabschnitte 5, 6 ausgebildet. In dem durch die Aussparung 3 und die Halterungsabschnitte 5, 6 gebildeten Raum 7 ist ein beleuchtbarer Einsatz 8 angeordnet.

Der beleuchtbare Einsatz 8 weist ein Träger-Bauteil 9 auf, das mit seitlichen Abschnitten 10 und 11 und mit einem mittleren Abschnitt 12 versehen ist. Auf den seitlichen Abschnitten 10, 11 sind Positionierungsabschnitte 13, 14 mit zur Unterseite 4 des Grundträgers 2 hin zeigenden Abstufungen 15, 16 angeordnet.

Die Positionierungsabschnitte 13, 14 dienen zur Ausrichtung und Fixierung des beleuchtbaren Einsatzes 8 in der vorgesehenen Lage an der Unterseite 4 des Grundträgers 2. In Richtung des mittleren Abschnittes 12 weisen Seitenwand-Abschnitte 17, 18 der Abstufungen 15, 16 jeweils eine Abschrägung 19, 20 auf.

Entsprechend den Abschrägungen 19, 20 der Abstufungen 15, 16 der Abschnitte 13, 14 sind an den zu den Abschrägungen 19, 20 gegenüberliegenden Seitenwand-Abschnitten 21, 22 von Seitenwänden 28, 29 einer äußeren Schicht 25 des beleuchtbaren Einsatzes 8 angepaßte Abschrägungen 23, 24 ausgebildet. In der gezeigten Ausführungsform verlaufen die sich oberhalb der Abschrägungen 23, 24 anschließenden Seitenwand-Abschnitte 26, 27 der Seitenwände 28, 29 senkrecht.

Zwischen den senkrechten Seitenwand-Abschnitten 26 und 27 der Seitenwände 28, 29 und dazu gegenüberliegenden senkrechten Seitenwand-Abschnitten 30, 31 von Seitenwänden 32, 33 des Grundträgers 2 ist jeweils ein Spalt 34, 35 mit einer Breite t ausgebildet.

Eine zur Umgebung, beispielsweise einem Fahrzeuginnenraum 37 hinweisende Außenfläche 36 ist so beschaffen oder so ausgebildet, dass aus der äußeren Schicht 25 austretendes Licht gedämpft oder in seiner Helligkeit verringert ist. Zu diesem Zweck kann die Außenfläche 36 uneben ausgebildet sein, indem die Außenfläche 36 als eine geprägte Oberfläche vorgesehen ist. In einer anderen Ausführungsform ist auf der Außenfläche 36 eine Schicht 38 vorgesehen, die das Licht dämpft. Die Schicht 38 kann als eine Folie, eine galvanische Beschichtung und/oder als eine Pulverbeschichtung ausgebildet sein.

Zwischen einer Unterseite 39 der äußeren Schicht 25 und einer Oberseite 40 des mittleren Trägerabschnittes 12 ist ein Hohlraum 41 ausgebildet, in dem ein Leuchtmittel 42 angeordnet ist. In einer Ausführungsform ist an einer Unterseite 52 der äußeren Schicht 25 eine Aussparung 51 ausgebildet, in der das Leuchtmittel 42 so angeordnet ist, dass ein umlaufender Seitenrand 50 des Leuchtmittels 42 von der äußeren Schicht 25 umgeben ist.

In der gezeigten Ausführungsform sind auf der Oberseite 40 des mittleren Trägerabschnittes 12 Vorsprünge und/oder Rippen 44 ausgebildet. Die Vorsprünge 44 dienen zur punktförmigen, linienförmigen und/oder flächigen Abstützung einer Unterseite 53 des Leuchtmittels 42.

In der gezeigten Ausführungsform ist das Leuchtmittel 42 eine Leuchtfolie 43. In einer anderen Ausführungsform sind SPC-Leiter mit Leuchtdioden mit und ohne Leuchtstab angeordnet. Die Leuchtfolie 43 kann an einen onbordigen oder an einen offbordigen Inverter (Wandler) angeschlossen sein.

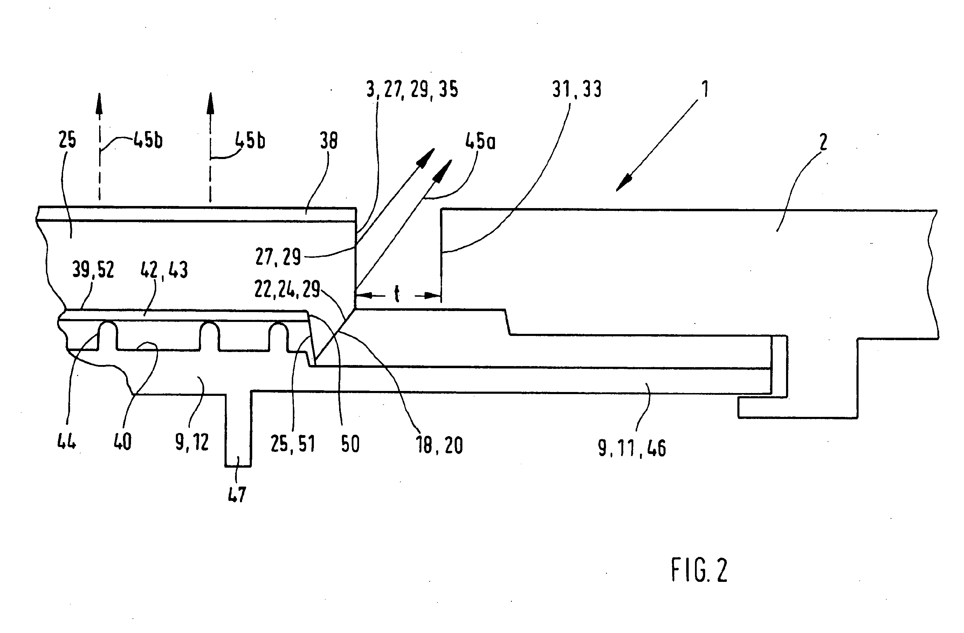

In der Fig. 2 sind in durchgezogenen Linien Pfeile 45a eingezeichnet, die das austretende, ungedämpfte Licht dargestellen. In strichlierten Linien sind Pfeile 45b eingezeichnet, die das austretende, gedämpfte Licht symbolisieren.

An einer Unterseite 46 des Träger-Bauteiles 9 sind Abstandsstege 47 vorgesehen, die auf einer Außenfläche 48 eines Trägers 49, beispielsweise einem Karosseriebauteil wie einem Schwellerabschnitt, einer Instrumententafel, einer Seitenwand oder einem Türblech, anliegen.

## Patentansprüche

1. Beleuchtbares Bauteil mit einem Grundträger (2), der mindestens eine Aussparung (3) aufweist, wobei in der Aussparung (3) ein beleuchtbarer Einsatz (8) angeordnet ist, wobei der beleuchtbare Einsatz (8) ein Träger-Bauteil (9) aufweist, auf dem ein Leuchtmittel (42) angeordnet ist, wobei oberhalb des Leuchtmittels (42) eine durchleuchtbare äußere Schicht (25) vorgesehen ist,
**dadurch gekennzeichnet, dass** die äußere Schicht (25) so ausgebildet ist, dass ein durch das Leuchtmittel (42) erzeugtes Licht (45b) gedämpft aus einer Außenfläche (36) der äußeren Schicht (25) austritt, dass zwischen mindestens einem Seitenwand-Abschnitt (21, 22) der äußeren Schicht (25) und einem dazu gegenüberliegenden Seitenwand-Abschnitt (26, 27) einer Seitenwand (28, 29) des Grundträgers (2) ein Spalt (34, 35) mit solchen Abmessungen ausgebildet ist, dass das Licht (45a) des Leuchtmittels (42) ungedämpft austreten kann, so dass der Spalt (34, 35) heller beleuchtet ist als die Außenfläche (36) der äußeren Schicht (25).

2. Beleuchtbares Bauteil nach Anspruch 1,
**dadurch gekennzeichnet, dass** die Außenfläche (36) der äußeren Schicht (25) eine Dekoroberfläche und/oder eine Dekorschicht (38) aufweist.

3. Beleuchtbares Bauteil nach den Ansprüchen 1 oder 2,
**dadurch gekennzeichnet, dass** die Dekorschicht (38) eine Beschichtung ist.

4. Beleuchtbares Bauteil nach Anspruch 3,
**dadurch gekennzeichnet, dass** die Dekorschicht (38) galvanische Beschichtung ist oder eine Pulver Beschichtung ist.

5. Beleuchtbares Bauteil nach Anspruch 2,
**dadurch gekennzeichnet, dass** die Dekorschicht (38) eine Dekorfolie ist.

6. Beleuchtbares Bauteil nach Anspruch 2,
**dadurch gekennzeichnet, dass** die Außenfläche (36) der äußeren Schicht (25) eine geprägte Oberfläche aufweist.

7. Beleuchtbares Bauteil nach einem der vorhergehenden Ansprüche,
**dadurch gekennzeichnet, dass** die durchleuchtbare äußere Schicht (25) ein Kunststoff ist.

8. Beleuchtbares Bauteil nach einem der vorhergehenden Ansprüche, **dadurch gekennzeichnet, dass** das Leuchtmittel (42) eine Leuchtfolie (43) ist, die einen onbordigen oder einen offbordigen Inverter (Wandler) aufweist.

9. Beleuchtbares Bauteil nach einem der vorhergehenden Ansprüche,
**dadurch gekennzeichnet, dass** der beleuchtbare Einsatz (8) ein Träger-Bauteil (9) aufweist und dass auf einer Oberfläche (40, 44) des Träger-Bauteiles (9) die Leuchtfolie (43) angeordnet ist.

10. Beleuchtbares Bauteil nach einem der vorhergehenden Ansprüche,
**dadurch gekennzeichnet, dass** an einer Unterseite (52) der äußeren Schicht (25) eine Aussparung (51) ausgebildet ist, in der die Leuchtfolie (43) so angeordnet ist, dass ein umlaufender Seitenrand (50) der Leuchtfolie (43) von der Aussparung (51) umgeben ist.

11. Beleuchtbares Bauteil nach einem der vorhergehenden Ansprüche,
**dadurch gekennzeichnet, dass** auf der Oberseite (40) des Träger-Bauteiles (9, 12) Vorsprünge (44) zur punktförmigen, linienförmigen und/oder flächigen Abstützung einer Unterseite (53) des Leuchtmittels (42, 43) ausgebildet sind.

12. Beleuchtbares Bauteil nach einem der vorhergehenden Ansprüche,
**dadurch gekennzeichnet, dass** an einer Unterseite (46) des Träger-Bauteiles (9) Abstandsstege (47) ausgebildet sind.

13. Beleuchtbares Bauteil nach einem der vorhergehenden Ansprüche,
**dadurch gekennzeichnet, dass** die äußere Schicht (25) an Seitenwand-Abschnitten (21, 22) von Seitenwänden (28, 29) Abschrägungen (23, 24) aufweist, die an Abschrägungen (19, 20) von Seitenwand-Abschnitten (17,18) aufliegen, die am Träger-Bauteil (9,15, 16) ausgebildet sind.

## Claims

1. A lighting component comprising a mounting (2) formed with at least one recess (3), wherein a lighting insert (8) is disposed in the recess (3), wherein the lighting insert (8) comprises a holder component (9) on which a lamp (42) is disposed, wherein a translucent outer layer (25) is provided above the lamp (42),
**characterised in that** the outer layer (25) is so constructed that a light (45b) generated by the lamp (42) is subdued when it leaves an outer surface (36) of the outer layer (25), a gap (34, 35) is formed between at least one side-wall portion (21, 22) of the outer layer (25) and an opposite portion (26, 27) of a side wall (28, 29) of the mounting (2), the gap (34, 35) being dimensioned so that the light (45a) can leave the lamp (42) without being subdued, so that the gap (34, 35) is more brightly illuminated than the outer surface (36) of the outer layer (25).

2. A lighting component according to claim 1,
**characterised in that** the outer surface (36) of the outer layer (25) has a decorative surface and/or a decorative layer (38).

3. A lighting component according to claim 1 or claim 2,
**characterised in that** the decorative layer (38) is a coating.

4. A lighting component according to claim 3,
**characterised in that** the decorative layer (38) is an electroplated coating or a powder coating.

5. A lighting component according to claim 2,
**characterised in that** the decorative layer (38) is a decorative foil.

6. A lighting component according to claim 2,
**characterised in that** the outer surface (36) of the outer layer (25) has an embossed surface.

7. A lighting component according to any of the preceding claims,
**characterised in that** the translucent outer layer (25) is of plastics material.

8. A lighting component according to any of the preceding claims,
**characterised in that** the lamp (42) is a light-emitting foil (43) comprising an on-board or an off-board inverter (transducer).

9. A lighting component according to any of the preceding claims,
**characterised in that** the lighting insert (8) has a holder component (9), on one surface (40, 44) of the holder component (9) the light-emitting foil (43) is disposed.

10. A lighting component according to any of the preceding claims,
**characterised in that** an underside (52) of the outer layer (25) is formed with a recess (51) in which the light-emitting foil (43) is so disposed that a peripheral edge (50) of the light-emitting foil (43) is surrounded by the recess (51).

11. A lighting component according to any of the preceding claim,
**characterised in that** the top (40) of the holder component (9, 10) is formed with projections (44) for punctiform, linear and/or planar support of an underside (53) of the lamp (42, 43).

12. A lighting component according to any of the preceding claims,
**characterised in that** spacer webs (47) are formed on an underside (46) of the holder component (9).

13. A lighting, component according to any of the preceding claims,
**characterised in that** portions (21, 22) of side walls (28, 29) of the outer layer (25) are bevelled (23, 24), resting on bevels (19, 20) on side-wall portions (17, 18) disposed on the holder component (9, 15, 16).

## Revendications

1. Elément éclairable comportant un support de base (2) ayant au moins un dégagement (3),
- le dégagement (3) logeant un insert éclairé (8),
- l'insert éclairé (8) ayant une pièce de support (9) munie d'une source lumineuse (42),
- une couche extérieure transparente (25) étant prévue au-dessus de la source lumineuse (42),
élément éclairable **caractérisé en ce que**
- la couche extérieure (25) est réalisée pour que la lumière (45b) générée par la source lumineuse (42) sorte de façon atténuée de la surface extérieure (36) de la couche extérieure (25),
- entre au moins un segment de paroi latérale (21, 22) de la couche extérieure (25) et un segment de paroi latérale (26, 27) en regard de celui-ci d'une paroi latérale (28, 29) du support de base (2), un intervalle (34, 35) a des dimensions telles que la lumière (45a) de la source lumineuse puisse sortir sans être atténuée pour que l'intervalle (34, 35) soit éclairé plus vivement que la surface extérieure (36) de la couche extérieure (25).

2. Elément éclairable selon la revendication 1,
**caractérisé en ce que**
la surface extérieure (36) de la couche extérieure (25) a une surface supérieure décorée et/ou une couche de décoration (38).

3. Elément éclairable selon la revendication 1 ou 2,
**caractérisé en ce que**
la couche de décoration (38) est un revêtement.

4. Elément éclairable selon la revendication 3,
**caractérisé en ce que**
la couche de décoration (38) est un revêtement de dépôt galvanique ou un revêtement de poudre.

5. Elément éclairable selon la revendication 2,
**caractérisé en ce que**
la couche de décoration (38) est un film de décoration.

6. Elément éclairable selon la revendication 2,
**caractérisé en ce que**
la surface extérieure (36) de la couche extérieure (25) a une surface imprimée.

7. Elément éclairable selon l'une des revendications précédentes,
**caractérisé en ce que**
la couche extérieure (25) transparente est une matière plastique.

8. Elément éclairable selon l'une des revendications précédentes,
**caractérisé en ce que**
la source lumineuse (42) est un film lumineux (43) ayant un inverseur (convertisseur) embarqué ou non embarqué.

9. Elément éclairable selon l'une des revendications précédentes,
**caractérisé en ce que**
l'insert éclairable (8) comportant un support (9) et la surface (40, 44) du support (9) porte le film éclairant (43).

10. Elément éclairable selon l'une des revendications précédentes,
**caractérisé en ce que**
la face inférieure (52) de la couche extérieure (25) comporte un dégagement (51) dans lequel se trouve le film éclairant (43) pour que le bord latéral périphérique (50) du film éclairant (43) soit entouré par le dégagement (51).

11. Elément éclairable selon l'une des revendications précédentes,
**caractérisé en ce que**
des parties en saillie (44) sont réalisées sur la face supérieure (40) du support (9, 12) pour assurer un appui ponctuel, linéaire ou surfacique de la face inférieure (53) de la source lumineuse (42, 43).

12. Elément éclairable selon l'une des revendications précédentes,
**caractérisé par**
des entretoises d'écartement (47) réalisées sur la face inférieure (46) du support (9).

13. Elément éclairable selon l'une des revendications précédentes,
**caractérisé en ce que**
la couche extérieure (25) comporte des parties inclinées (23, 24) sur les segments (21, 22) des parois latérales (28, 29), ces surfaces inclinées s'appuyant sur les surfaces inclinées (19, 20) des segments de paroi latérale (17, 18) réalisés sur le support (9, 15, 16).
